# EUROPEAN PATENT APPLICATION

(11) **EP 2 150 045 A2**
(43) Date of publication of application: **03.02.2010**
(21) Application number: 09003080.0
(22) Date of filing: 04.03.2009
(51) Int. Cl.: H04N 5/76

(54) **Recording control apparatus and recording control method**

(30) Priority: 31.07.2008 JP 2008198148
(71) Applicant: Kabushiki Kaisha Toshiba, Minato-ku Tokyo (JP)
(72) Inventor: Yoshida, Osamu, Minato-ku Tokyo (JP)
(74) Representative: HOFFMANN EITLE

(57) **Abstract**

According to an aspect of the present invention, there is provided a recording control apparatus including: a recording setting module (180) that sets recording of channels and a first recording time for a first channel of the channels; a recording time calculation module (110) that calculates a recording time for each of channels other than the first channel, based on remaining capacity of a recording module (111) and the first recording time; channel selection modules (103-173), each selects a broadcast signal of one channel, the channel selection modules including a first channel selection module (103) that selects a first broadcast signal of the first channel; and a recording control module (110) that controls recording of the first broadcast signal according to the first recording time and controls recording of broadcast signals of the channels other than the first channel according to the recording time.

## Description

### BACKGROUND

### 1. Field

An aspect of the present invention relates to a recording control apparatus and a method for controlling recording of terrestrial digital broadcasts, satellite digital broadcasts, etc.

### 2. Description of the Related Art

Recording apparatuses for recording programs on a DVD, an HDD, etc. have come into wide use. There has been further proposed a technique in which when recording is to be programmed, remaining capacity of a recording medium is calculated to inform the user whether programmed recording is possible or not (see WO-A1-02-028100).

On the other hand, there has appeared a recording apparatus equipped with a plurality of tuners so that the plurality of programs can be recorded simultaneously. For example, with respect to simultaneous recording of programs, there has been proposed a technique in which the number of recording programs is determined so that a total bit rate calculated from bit rates of respective programs based on Electronic Program Guide (EPG) does not exceed that based on memory processing (see JP-A-2000-217063).

The capacity of an HDD provided in a recording apparatus has increased remarkably in recent years and, accordingly, there is growing interest in automatic recording. That is, there is growing interest in a technique in which a recording apparatus performs automatic recording of required channels based on a given condition without user's one-by-one recording setting of programs to be recorded.

The capacity of the HDD provided in the recording apparatus is however finite though it has increased remarkably. Accordingly, there is demand on an automatic recording technique using such a finite storage capacity of the HDD efficiently.

### SUMMARY

One of objects of the present invention is to provide a recording control apparatus and a method for controlling automatic recording of programs so that storage resources such as an HDD can be used efficiently.

According to an aspect of the invention, there is provided a recording control apparatus including: a recording setting module configured to set recording of a plurality of channels and a first recording time for a first channel of the plurality of channels; a recording time calculation module configured to calculate a recording time for each of channels other than the first channel, based on remaining capacity of a recording module and the first recording time, the recording module configured to record a plurality of broadcast signals of the plurality of channels; a plurality of channel selection modules, each configured to select a broadcast signal of one channel from among the plurality of broadcast signals, the plurality of channel selection modules including a first channel selection module configured to select a first broadcast signal of the first channel; and a recording control module configured to control recording of the first broadcast signal according to the first recording time and to control recording of broadcast signals of the channels other than the first channel according to the recording time.

The recording time calculation module may be configured to calculate the recording time as an equalized time for each of the channels other than the first channel.

The plurality of channels further includes a second channel; the recording setting module is configured to set a second recording time for the second channel; the recording time calculation module is configured to calculate another recording time for each of channels other than the first and second channels, based on the remaining capacity of the recording module, the first recording time and the second recording time; the plurality of channel selection modules further include a second channel selection module configured to select a second broadcast signal of the second channel; and the recording control module is configured to control recording of the first broadcast signal according to the first recording time, to control recording of the second broadcast signal according to the second recording time, and to control recording of broadcast signals of the channels other than the first and second channels according to the another recording time.

The recording time calculation module may be configured to calculate the another recording time as an equalized time for each of the channels other than the first and second channels.

### BRIEF DESCRIPTION OF THE SEVERAL VIEWS OF THE DRAWINGS

A general architecture that implements the various feature of the present invention will now be described with reference to the drawings. The drawings and the associated descriptions are provided to illustrate embodiments of the present invention and not to limit the scope of the present invention.

Fig. 1 is an exemplary diagram showing a schematic configuration of a digital broadcast receiver according to an embodiment of the invention;

Fig. 2 is a view showing an example of a screen for setting a recording time for each channel in an automatic recording mode;

Fig. 3 is a view showing an example of the screen for setting a recording time for each channel in an automatic recording mode;

Fig. 4 is a view showing an example of a screen for setting a recording time for each channel in an automatic recording mode;

Fig. 5 is a view showing an example of a screen for setting a recording time for each channel in an automatic recording mode;

Fig. 6 is a view showing an example of a screen for setting a recording time for each channel in an automatic recording mode;

Fig. 7 is a view showing an example of a screen for setting a recording time for each channel in an automatic recording mode;

Fig. 8 is a view showing an example of a screen for setting a recording time for each channel in an automatic recording mode; and

Fig. 9 is a view showing an example of a screen for setting a recording time for each channel in an automatic recording mode.

### DETAILED DESCRIPTION

Various embodiments according to the present invention will be described hereinafter with reference to the accompanying drawings. In general, according to one embodiment of the present invention, there is provided a recording control apparatus including: a recording setting module configured to set recording of a plurality of channels and a first recording time for a first channel of the plurality of channels; a recording time calculation module configured to calculate a recording time for each of channels other than the first channel, based on remaining capacity of a recording module and the first recording time, the recording module configured to record a plurality of broadcast signals of the plurality of channels; a plurality of channel selection modules, each configured to select a broadcast signal of one channel from among the plurality of broadcast signals, the plurality of channel selection modules including a first channel selection module configured to select a first broadcast signal of the first channel; and a recording control module configured to control recording of the first broadcast signal according to the first recording time and to control recording of broadcast signals of the channels other than the first channel according to the recording time.

Various embodiments of the invention will be described below with reference to the drawings.

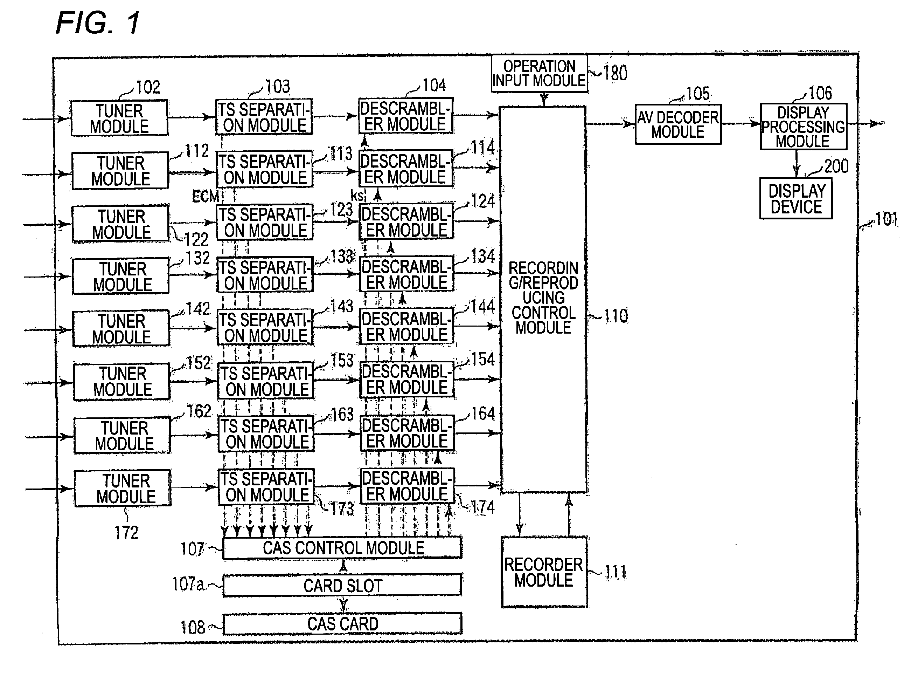

Fig. 1 is a diagram for explaining a configuration of a digital broadcast receiver 101 (recording control apparatus) according to an embodiment of the invention. The digital broadcast receiver 101 is, for example, a digital TV set equipped with a program recording control apparatus or a digital recorder equipped with a program recording control apparatus. This embodiment will be described on a case where the digital broadcast receiver 101 has eight or more tuner modules (terrestrial digital broadcast receiving tuners, BS/CS digital broadcast receiving tuners, etc.) for receiving scrambled digital broadcast signals by way of example.

A broadcast program signal received by a first tuner 102 is fed to a TS separation module 103. The TS separation module 103 separates program information (ECM) from the broadcast program signal. The separated ECM is transferred to a CAS module (a CAS card provided as an IC card: hereinafter properly referred to as CAS card) 108 mounted in a card slot (card interface I/F) 107a through a CAS control module 107. The ECM is decrypted with a work key (Kw) stored in the CAS card 108, so that a scramble key (Ks) is obtained. At the same time, attribute information of the program is obtained from the ECM and compared with contract information stored in the CAS card 108 to thereby determine whether descrambling is to be made or not. At the time of the determination, control is made based on an accounting method designated in the attribute information of the program. Incidentally, the encryption keys Ks and Kw vary according to each broadcasting corporation but are common to all receivers.

A broadcast program signal received by a second tuner 112 is fed to a TS separation module 113. The TS separation module 113 separates ECM from the broadcast program signal. The separated ECM is transferred to the CAS card 108 through the CAS control module 107. Similarly, a broadcast program signal received by a third tuner 122 is fed to a TS separation module 123. The TS separation module 123 separates ECM from the broadcast program signal. The separated ECM is transferred to the CAS card 108 through the CAS control module 107. Similarly, a broadcast program signal received by a fourth tuner 132 is fed to a TS separation module 133. The TS separation module 133 separates ECM from the broadcast program signal. The separated ECM is transferred to the CAS card 108 through the CAS control module 107. Similarly, a broadcast program signal received by a fifth tuner 142 is fed to a TS separation module 143. The TS separation module 143 separates ECM from the broadcast program signal. The separated ECM is transferred to the CAS card 108 through the CAS control module 107. Similarly, a broadcast program signal received by a sixth tuner 152 is fed to a TS separation module 153. The TS separation module 153 separates ECM from the broadcast program signal. The separated ECM is transferred to the CAS card 108 through the CAS control module 107. Similarly, a broadcast program signal received by a seventh tuner 162 is fed to a TS separation module 163. The TS separation module 163 separates ECM from the broadcast program signal. The separated ECM is transferred to the CAS card 108 through the CAS control module 107. Similarly, a broadcast program signal received by an eighth tuner 172 is fed to a TS separation module 173. The TS separation module 173 separates ECM from the broadcast program signal. The separated ECM is transferred to the CAS card 108 through the CAS control module 107.

In ordinary processing, the CAS control module 107 sends the ECMs received from the TS separation modules 103 to 173 to the CAS card 108 successively and sets the scramble keys Ks returned from the CAS card 108 in descrambler modules 104 to 174 respectively. The descrambler modules 104 to 174 descramble encrypted contents with the set keys Ks and send the descrambled broadcast program signals to a recording/reproducing control module 110. The recording/reproducing control module 110 records the broadcast program signals on a recorder module 111 or outputs the broadcast program signals to an AV decoder module 105.

The recorder module 111 is an HDD, a disk drive or an SD (registered trademark) card reader/writer. The broadcast program signals fed from the recording/ reproducing control module 110 are recorded on the recorder module 111. The recorder module 111 need not be essential to the digital broadcast receiver 101 and may be provided as a device which can be attached to the digital broadcast receiver 101. In this case, an output from the recording/reproducing control module 110 is transferred to the recorder module 111 through an IEEE1394 interface, a High-Definition Multimedia Interface (HDMI), etc. The AD decoder module 105 decodes each broadcast program signal into AV information (video and audio).

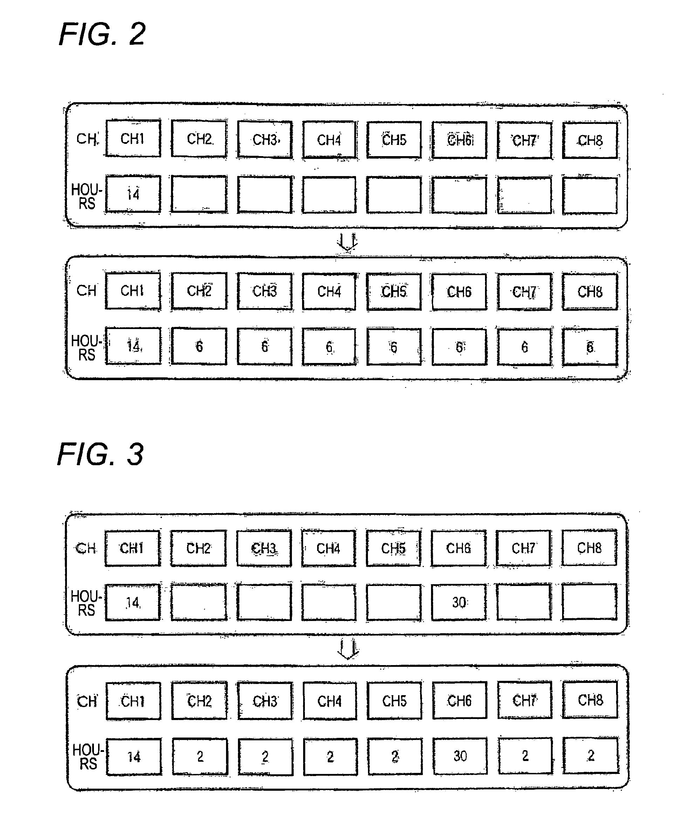

The decoded AV information output (AV output) is sent to a display device 200 or an external monitor (not shown) through a display processing module 106. The display processing module 106 has a Graphical User Interface (GUI) function for presenting information to the user by On Screen Display (OSD), etc. By the GUI function, a recording time setting screen shown in Figs. 2 to 9 is displayed on the display device 200 or the external monitor.

An operation input module 180 inputs various operations from the user. For example, the operation input module 180 inputs setting of automatic recording, setting of recording time and setting of a recording time slot from the user. The operation input module 180 may be a module equivalent to a fixed operation panel attached to the digital broadcast receiver 101 or may be a remote controller separated from the digital broadcast receiver 101.

Setting of recording time in an automatic recording mode will be described below. As described above, the digital broadcast receiver 101 has eight or more tuner modules. That is, the digital broadcast receiver 101 can simultaneously record at least eight channels.

When, for example, the user sets the channels 1 to 8 in an automatic recording mode and sets a recording time of 8 hours for the channels 1 to 8 through the operation input module 180, the recording/ reproducing control module 110 records program data of the channels 1 to 8 on the recorder module 111 for eight hours and then overwrites the oldest one of the recorded program data of the channels 1 to 8 with the newest program data of the channels 1 to 8. In this manner, the newest 8 hours' program data of the channels 1 to 8 are always stored in the recorder module 111.

Optimum automatic recording will be described below with reference to Figs. 2 to 9. First optimum automatic recording will be described first with reference to Figs. 2 and 3.

When the user sets the channels 1 to 8 in an optimum automatic recording mode and sets a recording time of 14 hours for the channel 1 through the operation input module 180, a screen shown in the upper part of Fig. 2 is displayed on the display device 200. Then, the recording/reproducing control module 110 calculates a recording time (e.g. of 6 hours) for each of the other channels (channels 2 to 8) than the channel 1 based on the remaining capacity of the recorder module 111 and the set recording time (14 hours) set for the channel l, so that the screen displayed on the display device 200 is changed from the screen shown in the upper part of Fig. 2 to a screen shown in the lower part of Fig. 2. Incidentally, as an example, the recording/reproducing control module 110 calculates an equalized recording time (e.g. of 6 hours) for each of the other channels (channels 2 to 8) than the channel 1 based on the remaining capacity of the recorder module 111 and the set recording time (14 hours) set for the channel 1.

The recording/reproducing control module 110 controls recording of the broadcast signal of the channel 1 selected by the tuner module 102 according to the set recording time (14 hours). That is, the recorder module 111 continues recording of the broadcast signal of the channel 1 so that the newest 14 hours' program data of the channel 1 are stored in the recorder module 111. The recording/reproducing control module 110 further controls recording of the broadcast signal of each of the channels 2 to 8 selected by the tuner modules 112, 122, 132, 142, 152, 162 and 172 according to the calculated recording time (e.g. of 6 hours). That is, the recorder module 111 continues recording of the broadcast signal of each of the channels 2 to 8 so that the newest 6 hours' program data of each of the channels 2 to 8 are stored in the recorder module 111.

On the other hand, when the user sets the channels 1 to 8 in an optimum automatic recording mode, sets a recording time of 14 hours for the channel 1 and sets a recording time of 30 hours for the channel 6 through the operation input module 180, a screen shown in the upper part of Fig. 3 is displayed on the display device 200. Then, the recording/reproducing control module 110 calculates a recording time (e.g. 2 hours) for each of the other channels (channels 2 to 5 and channels 7 and 8) than the channels 1 and 6 based on the remaining capacity of the recorder module 111, the set recording time (14 hours) set for the channel 1 and the set recording time (30 hours) set for the channel 6, so that the screen displayed on the display device 200 is changed from the screen shown in the upper part of Fig. 3 to a screen shown in the lower part of Fig. 3. Incidentally, as an example, the recording/reproducing control module 110 calculates an equalized recording time (2 hours) for each of the other channels (channels 2 to 5 and channels 7 and 8) than the channels 1 and 6 based on the remaining capacity of the recorder module 111, the set recording time (14 hours) set for the channel 1 and the set recording time (30 hours) set for the channel 6.

The recording/reproducing control module 110 controls recording of the broadcast signal of the channel 1 selected by the tuner module 102 according to the set recording time (14 hours) and controls recording of the broadcast signal of the channel 6 selected by the tuner module 152 according to the set recording time (30 hours). That is, the recorder module 111 continues recording of the broadcast signals of the channels 1 and 6 so that the newest 14 hours' program data of the channel 1 and the newest 30 hours' program data of the channel 6 are stored in the recorder module 111. The recording/reproducing control module 110 further controls recording of the broadcast signal of each of the channels 2 to 5, 7 and 8 selected by the tuner modules 112, 122, 132, 142, 162 and 172 according to the calculated recording time (e.g. of 2 hours). That is, the recorder module 111 continues recording of the broadcast signal of each of the channels 2 to 5, 7 and 8 so that the newest 2 hours' program data of each of the channels 2 to 5, 7 and 8 are stored in the recorder module 111.

The bit rate of a stream varies according to each channel. It is therefore necessary to calculate a storage capacity corresponding to the set recording time or the calculated recording time for each channel in consideration of the stream according to each channel so that the total storage capacity for all the channels does not exceed the remaining capacity of the recorder module 111.

The bit rate of terrestrial digital broadcasting is 1787.28 kbps per segment. The total bit rate of terrestrial digital broadcasting is from 18255.77 kbps to 23.2346 Mbps.

In BS/CS digital broadcasting, the transmission rate is 28.860 Mboud, so that the information rate is maximized when the trellis inner coding ratio is 2/3 and outer coding is RS (204, 188) in the condition of 8PQK modulation. Accordingly, in all 48 slots, the information rate nearly equals to: 28.860M x 3 (8PQK) x 2/3 (trellis) x 188/204 (RS) x 204/208 (phase reference burst) = 52.17 Mbps.

That is, the recording/reproducing control module 110 calculates a recording time for each of the other channels (channels 2 to 8) than the channel 1 based on the remaining capacity of the recorder module 111, the set recording time set for the channel 1 and the bit rates of the channels 1 to 8.

Similarly, the recording/reproducing control module 110 calculates a recording time for each of the other channels (channels 2 to 5, 7 and 8) than the channels 1 and 6 based on the remaining capacity of the recorder module 111, the set recording time set for the channel 1, the set recording time set for the channel 6 and the bit rates of the channels 1 to 8.

The digital broadcast receiver 101 acquires information concerned with the bit rates of the respective channels from the attribute information (e.g. EPG) of the broadcast signals. Or the digital broadcast receiver 101 acquires information concerned with the bit rates of the respective channels via a network.

In the aforementioned manner, the digital broadcast receiver 101 can set long-time recording for desired channels (e.g. the aforementioned channels 1 and 6) by preference according to an easy operation. When a recording time is first set for the channel 1 and a recording time is then set for the channel 6, the recording/reproducing control module 110 sets priority 1 for the channel 1 and sets priority 2 for the channel 6 (priority 1 > priority 2). When it becomes necessary to correct the recording time allocated to the channels 1 to 8, the recording/reproducing control module 110 first corrects the recording time allocated to the lowest priority channels 2 to 5, 7 and 8, then corrects the recording time allocated to the second lowest priority channel 6 if correction of the recording time is further required, and finally corrects the recording time allocated to the highest priority channel 1 if correction of the recording time is further required. In this manner, order of priority intended by the user is kept.

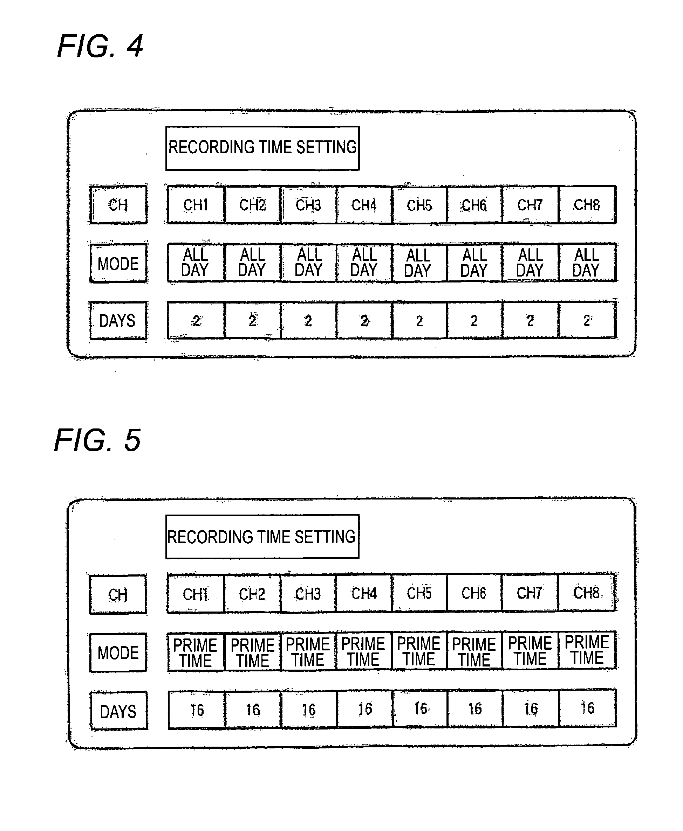

Second optimum automatic recording will be described below with reference to Figs. 4 and 5.

The user sets the channels 1 to 8 in an optimum automatic recording mode and sets a recording time slot (e.g. "all day") for each of the channels 1 to 8 through the operation input module 180. For example, a desired recording time slot can be selected from "all day" (00:00-24:00), "early morning" (04:00-07:00), "morning" (0:700-12:00), "afternoon" (12:00-19:00), "prime time" (19:00-22:00) and "midnight" (22:00-02:00). Or any time slot can be set.

In response to setting of the recording time slots, the recording/reproducing control module 110 calculates the number of recording days (e.g. 2 days (24 hours x 2 days)) for each of the channels 1 to 8 based on the remaining capacity of the recorder module 111 and the recording time slots (e.g. "all day") set for the channels 1 to 8 and displays a screen shown in Fig. 4 on the display device 200. In this case, an equalized value as the number of recording days (e.g. 2 days) is calculated for each of the channels 1 to 8.

The recording/reproducing control module 110 controls recording of the broadcast signals of the channels 1 to 8 selected by the tuner modules 102, 112, 122, 132, 142, 152, 162 and 172 according to the set recording time slots and the set number of recording days (e.g. 2 days). That is, the recorder module 111 continues recording of the broadcast signals of the channels 1 to 8 all day so that the newest 2 days' (24 hours x 2 days) program data of each of the channels 1 to 8 are stored in the recorder module 111.

Or the user sets the channels 1 to 8 in an optimum automatic recording mode and sets a recording time slot (e.g. "prime time") for each of the channels 1 to 8 through the operation input module 180. In response to setting of the recording time slots, the recording/reproducing control module 110 calculates the number of recording days (e.g. 16 days (3 hours x 16 days)) for each of the channels 1 to 8 based on the remaining capacity of the recorder module 111 and the recording time slots (e.g. "prime time") set for the channels 1 to 8 and displays a screen shown in Fig. 5 on the display device 200. In this case, an equalized value as the number of recording days (e.g. 16 days (3 hours x 16 days)) is calculated for each of the channels 1 to 8.

The recording/reproducing control module 110 controls recording of the broadcast signals of the channels 1 to 8 selected by the tuner modules 102, 112, 122, 132, 142, 152, 162 and 172 according to the set recording time slots and the set number of recording days (e.g. 16 days). That is, the recorder module 111 continues recording of the broadcast signals of the channels 1 to 8 during prime time so that the newest 16 days' prime time (3 hours x 16 days) program data of each of the channels 1 to 8 are stored in the recorder module 111.

That is, a recording time of 2 days is allocated to each of the channels 1 to 8 when the recording time slot of each of the channels 1 to 8 is set at "all day" (24 hours), whereas a recording time of 16 days is allocated to each of the channels 1 to 8 when the recording time slot of each of the channels 1 to 8 is set at "prime time" (3 hours).

In the aforementioned manner, the digital broadcast receiver 101 can set an optimum time as the number of recording days according to the remaining capacity of the recorder module 111 and the recording time slot set for each of the channels set in an automatic recording mode by the user.

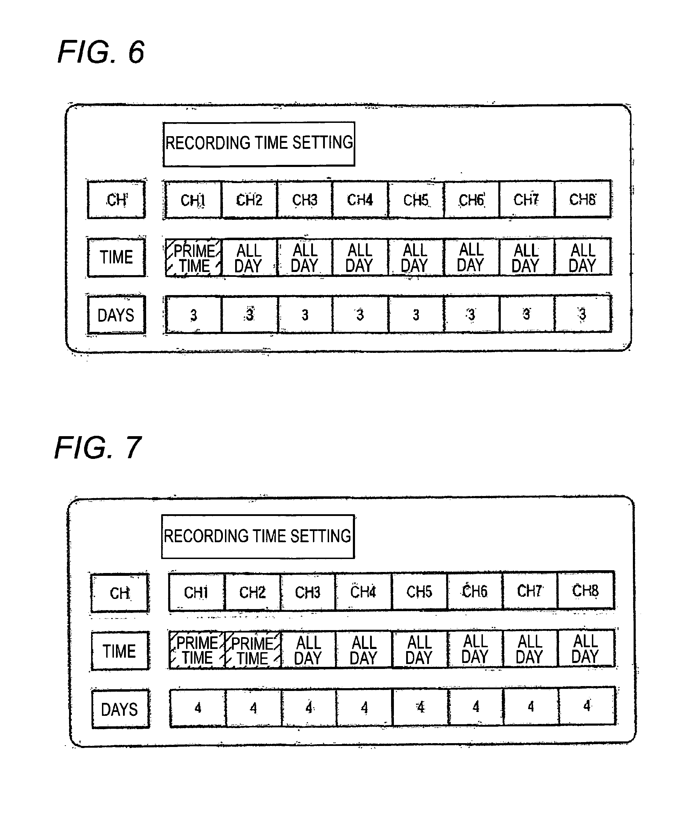

Third optimum automatic recording will be described below with reference to Figs. 6 and 7.

The user sets the channels 1 to 8 in an optimum automatic recording mode and sets a recording time slot (e.g. "all day") for each of the channels 1 to 8 through the operation input module 180. In response to setting of the recording time slots, the recording/reproducing control module 110 calculates the number of recording days (e.g. 2 days (24 hours x 2 days)) for each of the channels 1 to 8 based on the remaining capacity of the recorder module 111 and the recording time slots (e.g. "all day") set for the channels 1 to 8. In this case, for example, an equalized value as the number of recording days is calculated for each of the channels 1 to 8.

Assume that the user then changes the recording time slot of the channel 1 through the operation input module 180. For example, assume that the recording time slot of the channel 1 is changed from "all day" to "prime time". In response to the change in setting of the recording time slot, the recording/reproducing control module 110 recalculates the number of recording days (e.g. 3 days) for each of the channels 1 to 8 based on the remaining capacity of the recorder module 111, the recording time slot ("prime time") changed for the channel 1 and the recording time slots (e.g. "all day") set for the other channels 2 to 8 than the channel 1 and displays a screen shown in Fig. 6 on the display device 200. In this case, a recording time (3 hours x 3 days) corresponding to 3 days' prime time is calculated for the channel 1 and a recording time (24 hours x 3 days) corresponding to 3 days is calculated for each of the channels 2 to 8.

The recording/reproducing control module 110 controls recording of the broadcast signal of the channel 1 selected by the tuner module 102 according to the changed recording time slot ("prime time") and the recalculated number of recording days (3 days) and controls recording of the broadcast signals of the channels 2 to 8 selected by the tuner modules 112, 122, 132, 142, 152, 162 and 172 according to the set recording time slot ("all day") and the recalculated number of recording days (3 days). That is, the recorder module 111 continues recording of the broadcast signal of the channel 1 during prime time and continues recording of the broadcast signals of the channels 2 to 8 all day so that the newest 3 days' prime time (3 hours x 3 days) program data of the channel 1 and the newest 3 days' (24 hours x 3 days) program data of the channels 2 to 8 are stored in the recorder module 111.

Assume that the user further changes the recording time slot for the channel 2 through the operation input module 180. For example, assume that the user changes the recording time slot for the channel 2 from "all day" to "prime time". In response to the change in setting of the recording time slot, the recording/reproducing control module 110 recalculates the number of recording days (e.g. 4 days) for each of the channels 1 to 8 based on the remaining capacity of the recorder module 111, the changed recording time slot ("prime time") for the channel 1, the changed recording time slot ("prime time") for the channel 2 and the recording time slot (e.g. "all day") set for the other channels 3 to 8 than the channels 1 and 2 and displays a screen shown in Fig. 7 on the display device 200. In this case, a recording time corresponding to 4 days' prime time is calculated for each of the channels 1 and 2 while a recording time corresponding to 4 days is calculated for each of the channels 3 to 8.

The recording/reproducing control module 110 controls recording of the broadcast signals of the channels 1 and 2 selected by the tuner modules 102 and 112 according to the changed recording time slot ("prime time") and the recalculated number of recording days (4 days) and controls recording of the broadcast signals of the channels 3 to 7 selected by the tuner modules 122, 132, 142, 152, 162 and 172 according to the set recording time slot ("all day") and the recalculated number of recording days (4 days). That is, the recorder module 111 continues recording of the broadcast signals of the channels 1 and 2 during prime time and continues recording of the broadcast signals of the channels 3 to 8 all day so that the newest 4 days' prime time (3 hours x 4 days) program data of the channels 1 and 2 and the newest 4 days' (24 hours x 4 days) program data of the channels 3 to 8 are stored in the recorder module 111.

That is, when the recording time slot for the channel 1 is changed from "all day" (about 24 hours) to "prime time" (about 3 hours), the storage capacity required for recording decreases. As the required storage capacity decreases, the recording time for the channels 2 to 8 can be made longer. When the recording time slot for the channel 2 is further changed from "all day" (about 24 hours) to "prime time" (about 3 hours), the storage capacity required for recording further decreases. As the required storage capacity decreases, the recording time for the channels 3 to 8 can be made further longer.

In the aforementioned manner, the digital broadcast receiver 101 can set the optimum number of recording days according to the remaining capacity of the recorder module 111 and the recording time slot (changed time slot) set for each channel set in an automatic recording mode by the user.

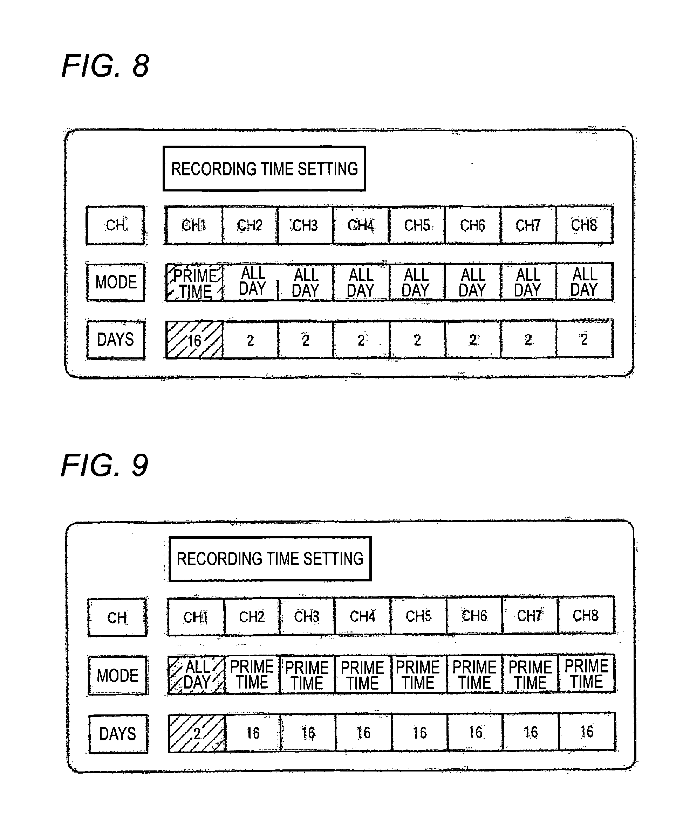

Fourth optimum automatic recording will be described below with reference to Figs. 8 and 9.

The user sets the channels 1 to 8 in an optimum automatic recording mode and sets a recording time slot (e.g. "all day") for each of the channels 1 to 8 through the operation input module 180. In response to setting of the recording time slots, the recording/reproducing control module 110 calculates the number of recording days (e.g. 2 days (24 hours x 2 days)) for each of the channels 1 to 8 based on the remaining capacity of the recorder module 111 and the recording time slots (e.g. "all day") set for the channels 1 to 8. In this case, an equalized value as the number of recording days (e.g. 2 days) is calculated for each of the channels 1 to 8.

Assume that the user then changes the recording time slot for the channel 1 through the operation input module 180. For example, assume that the recording time slot for the channel 1 is changed from "all day" (24 hours) to "prime time" (3 hours). In response to the change in setting of the recording time slot, the recording/reproducing control module 110 recalculates the number of recording days (e.g. 3 hours x 16 days) for the channel 1 based on the recording time slot ("prime time") changed for the channel 1 and displays a screen shown in Fig. 8 on the display device 200. In this case, only the number of recording days for the channel 1 is extended.

The recording/reproducing control module 110 controls recording of the broadcast signal of the channel 1 selected by the tuner module 102 according to the changed recording time slot ("prime time") and the recalculated number of recording days (16 days) and controls recording of the broadcast signals of the channels 2 to 8 selected by the tuner modules 112, 122, 132, 142, 152, 162 and 172 according to the set recording time slot ("all day") and the calculated number of recording days (2 days). That is, the recorder module 111 continues recording of the broadcast signal of the channel 1 during prime time and continues recording of the broadcast signals of the channels 2 to 8 all day so that the newest 16 days' prime time (3 hours x 16 days) program data of the channel 1 and the newest 2 days' (24 hours x 2 days) program data of the channels 2 to 8 are stored in the recorder module 111.

Or the user sets the channels 1 to 8 in an optimum automatic recording mode and sets a recording time slot (e.g. "prime time") for each of the channels 1 to 8 through the operation input module 180. In response to setting of the recording time slots, the recording/reproducing control module 110 calculates the number of recording days (e.g. 16 days (3 hours x 16 days)) for each of the channels 1 to 8 based on the remaining capacity of the recorder module 111 and the recording time slots (e.g. "prime time") set for the channels 1 to 8. In this case, an equalized value as the number of recording days (e.g. 16 days (3 hours x 16 days)) is calculated for each of the channels 1 to 8.

Assume that the user then changes the recording time slot for the channel 1 through the operation input module 180. For example, assume that the recording time slot for the channel 1 is changed from "prime time" (3 hours) to "all day" (24 hours). In response to the change in setting of the recording time slot, the recording/reproducing control module 110 recalculates the number of recording days (e.g. 2 days (24 hours x 2 days) for the channel 1 based on the recording time slot ("all day") changed for the channel 1 and displays a screen shown in Fig. 9 on the display device 200. In this case, only the number of recording days for the channel 1 is shortened.

The recording/reproducing control module 110 controls recording of the broadcast signal of the channel 1 selected by the tuner module 102 according to the changed recording time slot ("all day") and the recalculated number of recording days (2 days) and controls recording of the broadcast signals of the channels 2 to 8 selected by the tuner modules 112, 122, 132, 142, 152, 162 and 172 according to the set recording time slot ("prime time") and the calculated number of recording days (16 days). That is, the recorder module 111 continues recording of the broadcast signal of the channel 1 all day and continues recording of the broadcast signals of the channels 2 to 8 during prime time so that the newest 2 days' (24 hours x 2 days) program data of the channel 1 and the newest 16 days' (3 hours x 16 days) prime time program data of the channels 2 to 8 are stored in the recorder module 111.

In the aforementioned manner, the digital broadcast receiver 101 can set the optimum number of recording days according to the remaining capacity of the recorder module 111 and the recording time slot (changed time slot) set for each channel set in an automatic recording mode by the user and can further set the optimum number of recording days for a specific channel by recalculating only the number of recording days for the specific channel according to change in the recording time slot for the specific channel.

The "module" used in this specification may be implemented by hardware or may be implemented by software with use of a CPU or the like.

It is to be understood that the present invention is not limited to the aforementioned embodiments and various changes may be made in practical use without departing from the gist of the invention. The respective embodiments of the invention may be used in appropriate combination if possible. In this case, an effect due to the combination can be obtained. In addition, the aforementioned embodiments include various stages of the invention, and various inventions can be extracted when disclosed components are combined appropriately. For example, when some components are removed from all the components disclosed in the embodiments, a configuration without some components can be extracted as an invention.

## Claims

1. A recording control apparatus comprising:
a recording setting module configured to set recording of a plurality of channels and a first recording time for a first channel of the plurality of channels;
a recording time calculation module configured to calculate a recording time for each of channels other than the first channel, based on remaining capacity of a recording module and the first recording time, the recording module configured to record a plurality of broadcast signals of the plurality of channels;
a plurality of channel selection modules, each configured to select a broadcast signal of one channel from among the plurality of broadcast signals, the plurality of channel selection modules including a first channel selection module configured to select a first broadcast signal of the first channel; and
a recording control module configured to control recording of the first broadcast signal according to the first recording time and to control recording of broadcast signals of the channels other than the first channel according to the recording time.

2. The recording control apparatus of Claim 1, wherein the recording time calculation module is configured to calculate the recording time as an equalized time for each of the channels other than the first channel.

3. The recording control apparatus of Claim 1, wherein:
the plurality of channels further includes a second channel;
the recording setting module is configured to set a second recording time for the second channel;
the recording time calculation module is configured to calculate another recording time for each of channels other than the first and second channels, based on the remaining capacity of the recording module, the first recording time and the second recording time;
the plurality of channel selection modules further include a second channel selection module configured to select a second broadcast signal of the second channel; and
the recording control module is configured to control recording of the first broadcast signal according to the first recording time, to control recording of the second broadcast signal according to the second recording time, and to control recording of broadcast signals of the channels other than the first and second channels according to the another recording time.

4. The recording control apparatus of Claim 3, wherein the recording time calculation module is configured to calculate the another recording time as an equalized time for each of the channels other than the first and second channels.
